# EUROPEAN PATENT APPLICATION

(11) **EP 3 133 306 A1**
(43) Date of publication of application: **22.02.2017**
(21) Application number: 15779533.7
(22) Date of filing: 13.04.2015
(51) Int. Cl.: F16C 33/12, B22F 5/00, B22F 7/04, C22C 9/02

(54) **SLIDING MEMBER AND SLIDING BEARING**

(30) Priority: 15.04.2014 JP 2014083511
(71) Applicant: Taiho Kogyo Co., Ltd, Toyota-shi, Aichi 471-8502 (JP)
(72) Inventor: WADA, Hitoshi, Toyota-shi Aichi 471-8502 (JP)
(74) Representative: Intès, Didier Gérard André
(86) International application number: PCT/JP2015/061347
(87) International publication number: WO 2015/159842

(57) **Abstract**

To provide a technology with which cleavage fracture to a sliding surface can be prevented. A sliding member and a sliding bearing include a base layer and a cover layer of a cover material having a sliding surface for a counterpart material, the cover layer being formed on the base layer. The cover layer has a crystalline structure of the cover material including crystalline grains having a grain diameter of 3 µm or more and 7 µm or less.

## Description

### TECHNICAL FIELD

The present invention relates to a sliding member and a sliding bearing each having a sliding surface on which a counterpart shaft slides.

### BACKGROUND ART

Technologies of forming a cover layer of Bi on a Cu alloy to slide a counterpart material on the cover layer are known (see Patent Literature 1). In Patent Literature 1, an intermediate layer of Ag is formed under the cover layer of Bi. This layer can improve the conformability derived from Bi and prevent fatigue fracture by virtue of Ag.

### CITATION LIST

Patent Literature 1: JP 2006-266445 A

### SUMMARY OF INVENTION

### TECHNICAL PROBLEMS

In Patent Literature 1, however, the crystalline structure of Bi in the cover layer forms a columnar crystal, and disadvantageously tends to cause cleavage fracture in grain boundaries of the columnar crystal. Especially, when Bi has a small crystalline grain diameter, cleavage fracture in grain boundaries disadvantageously tends to occur at the time of fatigue.

The present invention has been made in light of the above problems, and an object thereof is to provide a technology with which cleavage fracture of the sliding surface at the time of fatigue can be prevented.

### SOLUTIONS TO PROBLEMS

In order to attain the object, in a sliding member and a sliding bearing according to the present invention, a cover layer of a cover material having a sliding surface for a counterpart material is formed on a base layer. The cover layer has a crystalline structure of the cover material including crystalline grains having a grain diameter of 3 µm or more and 7 µm or less. The crystalline grain diameter of the cover material is defined as 3 µm or more in this manner, thereby making it possible to promote the transition in the crystalline grains at the time of fatigue. Specifically, the promotion of the movement of the transition in the crystalline grains can increase the ductility of the cover layer and prevent cleavage fracture at the time of fatigue. On the other hand, the crystalline grain diameter of the cover material is defined as 7 µm or less, leading to reduction in strength so that the promotion of fatigue fracture can be prevented conversely.

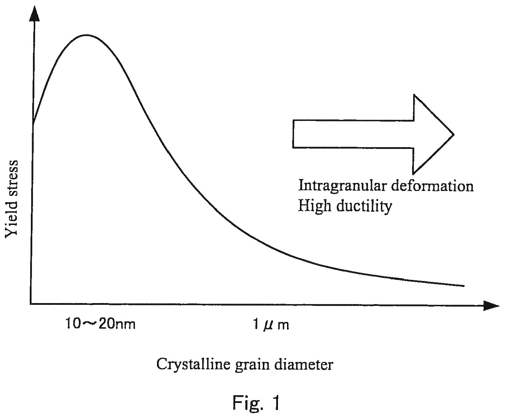

FIG. 1 is a graph showing the relationship between the crystalline grain diameter and the yield stress (cited: T. G. Nieh, Lawrence Livermore National Lab). As shown in this figure, the yield stress becomes maximum at a crystalline grain diameter of approximately 10 nm to 20 nm, and, in a region wherein the crystalline grain diameter is greater than this crystalline grain diameter, the yield stress decreases as the crystalline grain diameter becomes larger in accordance with the relationship of Hall-Petch. In a region of the crystalline grain diameter where the yield stress is in accordance with the relationship of Hall-Petch, the cover layer yields at an early stage, but the transition can be easily moved within the crystalline grains having a large grain diameter, so that the cover layer can be plastically deformed. Namely, the cover layer can be plastically deformed with stress smaller than that required for cleavage of the crystalline grain boundary, whereby the cleavage fracture of the cover layer can be prevented.

Also, the cover material may be Bi, Sn, Pb, In or Sb. All of Bi, Sn, Pb, In and Sb have small hardness (for example, Mohs hardness), and are suitable as the cover material. The effects of the present invention explained above are obtained also in a sliding bearing having the characteristic features of the present invention.

### BRIEF DESCRIPTION OF DRAWINGS

FIG. 1 is a graph showing the relationship between the crystalline grain diameter and the yield stress.

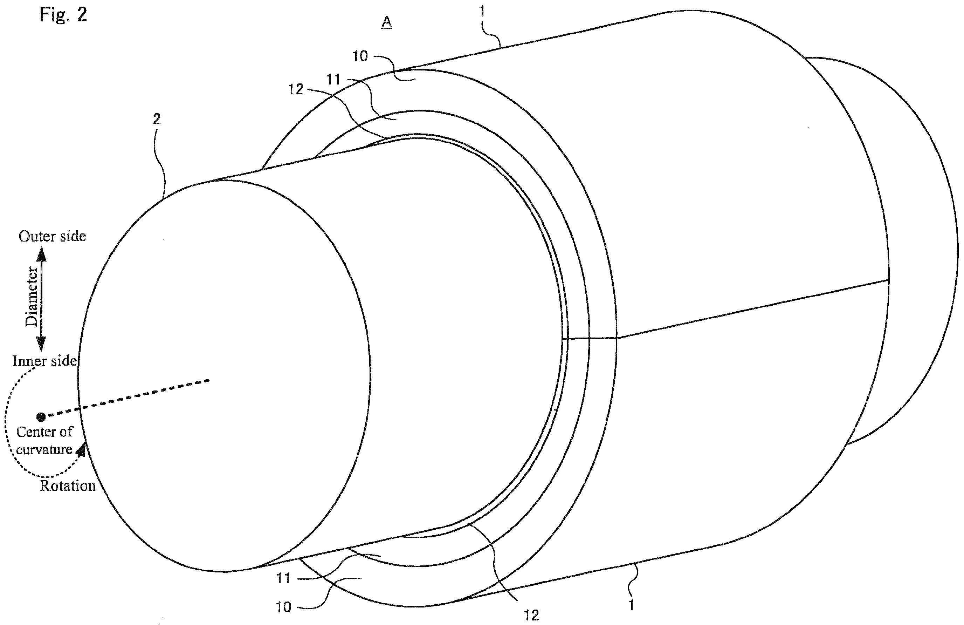

FIG. 2 is a perspective view of a sliding member according to an embodiment of the present invention.
FIG. 3A is a schematical diagram of a fatigue test, and FIG. 3B is a graph of a fatigue damage area rate.

### DESCRIPTION OF EMBODIMENTS

Embodiments of the present invention will now be described in the following orders.
(1) First embodiment:
   (1-1) Constitution of sliding member:
   (1-2) Measurement method:
   (1-3) Method for producing sliding member:
(2) Experimental result:
(3) Other embodiments:

### (1) First embodiment:

### (1-1) Constitution of sliding member:

FIG. 1 is a perspective view of a sliding member 1 according to one embodiment of the present invention. The sliding member 1 includes a back metal 10, a lining 11 and an overlay 12. The sliding member 1 is a metal member having a half-divided shape obtained by bisecting a hollow cylinder in a diameter direction, and has a semi-arcuate cross section. Two sliding members 1 are combined to form a cylindrical shape, thereby forming a sliding bearing A. The sliding bearing A bears a columnar counterpart shaft 2 (crankshaft of an engine) in its hollow portion formed inside. The outer diameter of the counterpart shaft 2 is formed to be slightly smaller than the inner diameter of the sliding bearing A. Lubricant oil (engine oil) is fed to a gap formed between the outer peripheral surface of the counterpart shaft 2 and the inner peripheral surface of the sliding bearing A. At that time, the outer peripheral surface of the counterpart shaft 2 slides on the inner peripheral surface of the sliding bearing A.

The sliding member 1 has a structure in which the back metal 10, lining 11 and overlay 12 are laminated in an order of being away from the center of curvature. Hence, the back metal 10 constitutes the outermost layer of the sliding member 1, and the overlay 12 constitutes the innermost layer of the sliding member 1. The back metal 10, lining 11 and overlay 12 each have a certain thickness in the circumferential direction. The thickness of the back metal 10 is 1.3 mm; that of the lining 11 is 0.2 mm; and that of the overlay 12 is 12 µm. The radius of the surface on a side of the center of curvature of the overlay 12 (inner diameter of the sliding member 1) is 40 mm. Hereinafter, the "inner (side)" means a side of the center of curvature of the sliding member 1, and the "outer (side)" means a side opposite to the center of curvature of the sliding member 1. The inner surface of the overlay 12 constitutes the sliding surface for the counterpart shaft 2.

The back metal 10 is formed of steel containing 0.15 wt% of C, 0.06 wt% of Mn and the balance Fe. The back metal 10 is preferably formed of a material which can support the load from the counterpart shaft 2 via the lining 11 and the overlay 12, and is not necessarily required to be formed of steel.

The lining 11 is a layer laminated on the inner side of the back metal 10, and constitutes the base layer of the present invention. The lining 11 consists of 10 wt% of Sn, 8 wt% of Bi, and the balance Cu with inevitable impurities. The inevitable impurities contained in the lining 11 are Mg, Ti, B, Pb, Cr and the like, and are impurities mixed in smelting or scrapping. The content of the inevitable impurities is 1.0 wt% or less, as a whole.

The overlay 12 is a layer laminated on the inner surface of the lining 11, and constitutes the cover layer of the present invention. The overlay 12 consists of Bi and inevitable impurities. The content of the inevitable impurities is 1.0 wt% or less. In this embodiment, the overlay 12 has a crystalline structure composed of crystalline grains of Bi, and the average grain diameter of the crystalline grains of Bi constituting the overlay 12 was 4 µm.

As a result of a fatigue test on the sliding member 1 explained above, the fatigue damage area rate was good, 10%. The grain diameter of the crystalline grains in the overlay 12 is defined as 4 µm, thereby making it possible to promote the transition in the crystalline grains at the time of fatigue and to prevent cleavage fracture in the crystalline grain boundaries. Specifically, the movement of the transition in the crystalline grains is promoted, thereby making it possible to increase the ductility of the entire overlay 12 and to prevent cleavage fracture at the time of fatigue. Also, the grain diameter of the crystalline grains in the cover material is defined as 7 µm, leading to reduction in strength, thereby making it possible to prevent the promotion of fatigue fracture conversely.

### (1-2) Measurement method:

The respective numerical values presented in the above embodiment were measured by the following technique. The masses of the elements constituting the respective layers of the sliding member 1 were measured by an ICP emission spectrometer (ICPS-8100 manufactured by Shimadzu Corporation).

The thicknesses of the respective layers were measured through the following procedures. Firstly, the cross section, in the diameter direction, of the sliding member 1 was polished by a cross section polisher (IB-09010CP manufactured by JEOL Ltd.). Then, the cross section of the sliding member 1 was photographed at a magnification of 7000 by an electron microscope (JSM-6610A manufactured by JEOL Ltd.), thereby obtaining image data on observed images (reflected electron images). Then, the observed images were analyzed by an image analyzer (LUZEX AP manufactured by NIRECO) to measure the film thickness.

The average grain diameter of the crystalline grains of Bi in the overlay 12 was measured through the following procedures. Firstly, an arbitrary cross section of the overlay 12 was polished by a cross section polisher. An arbitrary observation visual field range (rectangular range having length: 0.1 mm × breadth: 0.2 mm) having an area of 0.02 mm², in the cross section of the overlay 12, was photographed at a magnification of 7000 by an electron microscope (JSM-6610A manufactured by JEOL Ltd.), thereby obtaining image data on observed images (reflected electron images). Then, the observed images were subjected to a section method, thereby measuring the grain diameter of the crystalline grains of Bi. In this section method, the grain diameter of the crystalline grains on a line segment formed on the observed images was measured by dividing the length of the line segment by the number of the crystalline grains through which the line segment passed. Further, the arithmetic average value (total value/number of line segments) of the grain diameters of the crystalline grains measured for a plurality of line segments, respectively, was measured as an average grain diameter.

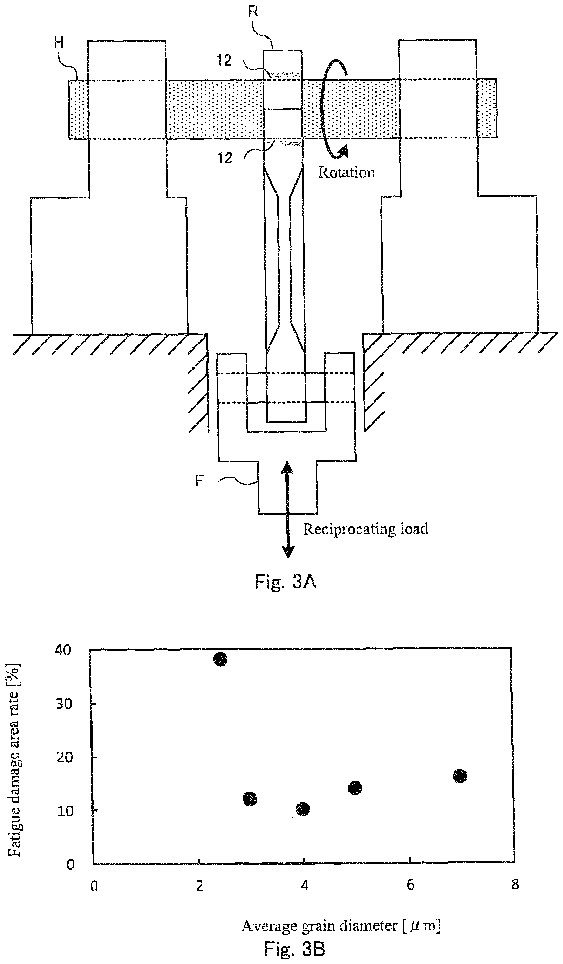

The fatigue damage area rate was measured through the following procedures. Firstly, a fatigue test was conducted by a fatigue test device as shown in FIG. 3A. As shown in FIG. 3A, a connecting rod R with columnar through-holes formed at both ends in the longitudinal direction was provided, and a test shaft H (lightly hatched) was borne in the through-hole at one end. An overlay 12 (thickly hatched) similar to that of the sliding member 1 was formed on the inner peripheral surface of the through-hole formed in the connecting rod R for bearing the test shaft H. The test shaft H was borne at both outer sides of the connecting rod R in the axial direction of the test shaft H, and rotated so that the number of rotations was 3000 rotations/min. The end part of the connecting rod R, which was opposite to the test shaft H, was connected to a moving body F reciprocating in the longitudinal direction of the connecting rod R (3000 reciprocations/min.), and the reciprocating load of the moving body F was defined as 50 MPa. Also, engine oil at 120°C was fed between the connecting rod R and the test shaft H.

The above state was maintained over 50 hours to conduct the fatigue test on the overlay 12. After the fatigue test, the inner surface (sliding surface) of the overlay 12 was photographed from a position on a straight line orthogonal to the surface in such a manner that the straight line was the main light axis, thereby obtaining evaluation images which were the photographed images. Then, damaged portions in the surface of the overlay 12 projected on the evaluation images were observed and identified by a binocular (magnifier), and the percentage of the value obtained by dividing the damaged part area, as an area of the damaged portions, by the area of the entire surface of the overlay 12 projected in the evaluation images was measured as the fatigue damage area rate.

### (1-3) Method for producing sliding member:

Firstly, a flat plate of low carbon steel having the same thickness as that of the back metal 10 was provided.

Next, a powder of the material constituting the lining 11 was dispersed on the flat plate formed of low carbon steel. Specifically, a Cu powder, a Bi powder and a Sn powder were mixed, and the mixed powder was dispersed on the flat plate of low carbon steel so as to attain the mass ratio among the respective components in the lining 11 described above. Any powder may be used so long as the mass ratio among the respective components in the lining 11 can be satisfied, and alloy powders of Cu-Bi, Cu-Sn and the like may be dispersed on the flat plate of low carbon steel. The grain diameter of the powder was adjusted to 150 µm or less by use of a sieve for testing (JIS Z8801).

Next, the flat plate of low carbon steel and the powder dispersed on the flat plate were sintered. The sintering temperature was controlled to 700°C to 1000°C for sintering in an inert atmosphere. Sintering was followed by cooling.

After completion of cooling, a Cu alloy layer is formed on the flat plate of low carbon steel. This Cu alloy layer would contain soft Bi particles deposited during cooling.

Next, the low carbon steel on which the Cu alloy layer was formed was press-machined into a shape such that a hollow cylinder was bisected in the diameter direction. At this time, press-machining was conducted so that the outer diameter of the low carbon steel coincided with the outer diameter of the sliding member 1.

Then, the surface of the Cu alloy layer formed on the back metal 10 was cut. At this time, the quantity of cutting was controlled so that the thickness of the Cu alloy layer formed on the back metal 10 was equal to that of the lining 11. This allows for formation of the lining 11 by the Cu alloy layer after cutting. Cutting was conducted by use of a lathe set with a cutting tool material formed, for example, of sintered diamond.

Next, Bi serving as a cover material was laminated, at a thickness of 12 µm, on a surface of the lining 11 by electroplating, thereby forming an overlay 12. The Bi-electroplating procedures were conducted as will be described below. Firstly, the surface of the lining 11 was defatted by flowing current onto the surface of the lining 11 in an electrolyte solution. Then, the surface of the lining 11 was washed with water. Further, the surface of the lining 11 was washed with an acid to remove an unnecessary oxide. Thereafter, the surface of the lining 11 was washed with water again. After completion of the above pretreatment, Bi-electroplating was conducted by supplying current to the lining 11 immersed in a plating bath.

The conditions for Bi-electroplating in the overlay 12 were as will be described below. The plating bath was designed so as to have a bath composition including Bi (concentration): 40 to 60 g/L; an organic sulfonic acid: 25 to 100 g/L; and an additive: 0.5 to 50 g/L. The bath temperature of the plating bath was adjusted within the range between 40°C and 60°C. Further, rectangular pulse current having a duty ratio of 50% was employed as the current to be supplied to the lining 11, and its average current density was defined within 4 A to 8 A/dm².

The lamination of the overlay 12 was followed by water-washing and drying, thereby completing a sliding member 1. Further, two sliding members 1 were combined to form a cylindrical shape, thereby forming a sliding bearing A.

### (2) Experimental result:

**[Table 1]**

| Sample | Average grain diameter [µm] | Fatigue damage rate [%] |
|---|---|---|
| 1 | 25 | 38 |
| 2 | 3 | 12 |
| 3 | 4 | 10 |
| 4 | 5 | 14 |
| 5 | 7 | 16 |

Table 1 indicates the results of measurement of the fatigue damage area rate for each average grain diameter of Bi in the overlay 12. Samples 1 to 5 (Sample 3 for the above embodiment) having different average grain diameters of Bi were produced by a method similar to the production method described above. However, the average grain diameter of Bi was adjusted by adjusting the current density in the electroplating of the overlay 12. Due to the property that the average grain diameter of Bi becomes larger as the current density in the electroplating of the overlay 12 increases, the current density was adjusted to be greater as the target average grain diameter became larger.

FIG. 3B is a graph showing the fatigue damage area rate for each average grain diameter of Bi. As shown in this figure, it has been understood that the average grain diameter is increased in a region where the average grain diameter of Bi ranges from 2 µm to 3 µm, thereby suddenly suppressing the fatigue damage area. Also, it has been understood that the average grain diameter is increased in a region wherein the average grain diameter of Bi is 4 µm or more, so that the fatigue damage area slightly increases. This is presumably caused by reduction in strength when the average grain diameter of Bi increases. Therefore, it has been understood that the average grain diameter of Bi is desirably defined as 3 µm or more and 7 µm or less in order to obtain the fatigue resistance required of the sliding bearing A.

### (3) Other embodiments:

Although the above embodiment has illustrated the sliding member 1 constituting the sliding bearing A for bearing the crankshaft of an engine, the sliding bearing A for other applications may be formed by the sliding member 1 of the present invention. For example, gear bushing, piston pin bushing/boss bushing, etc. for transmissions may be formed by the sliding member 1 of the present invention. Also, the matrix of the lining 11 is not limited to the Cu alloy, and the material for the matrix is preferably selected according to the hardness of the counterpart shaft 2. Also, any material may be used as the cover material so long as the material is softer than the lining 11, and any of Pb, Sn, In, Sb and the like may be used. Also in Pb, Sn, In and Sb, the ductility can be improved by increasing the grain diameter of the crystalline grains.

### REFERENCE SIGNS LIST

- 1...: Sliding member
- 2...: Counterpart shaft
- 10...: Back metal
- 11...: Lining
- 11b...: Bi particles
- 12...: Overlay

## Claims

1. A sliding member comprising a base layer and a cover layer of a cover material having a sliding surface for a counterpart material, the cover layer being formed on the base layer,
wherein the cover layer has a crystalline structure of the cover material including crystalline grains having a grain diameter of 3 µm or more and 7 µm or less.

2. The sliding member according to claim 1, wherein the cover material is Bi, Sn, Pb, In or Sb.

3. A sliding bearing comprising a base layer and a cover layer of a cover material having a sliding surface for a counterpart material, the cover layer being formed on the base layer,
wherein the cover layer has a crystalline structure of the cover material including crystalline grains having a grain diameter of 3 µm or more and 7 µm or less.
